(19) 

Europäisches
Patentamt
European
Patent Office
Office européen
des brevets

(11) **EP 3 099 975 B1**

(12) **EUROPEAN PATENT SPECIFICATION**

(45) Date of publication and mention
of the grant of the patent:
**13.11.2019 Bulletin 2019/46**

(21) Application number: **15743529.8**

(22) Date of filing: **30.01.2015**

(51) Int Cl.:
**F23M 5/00** *(2006.01)*       **F02C 7/12** *(2006.01)*

(86) International application number:
**PCT/US2015/013784**

(87) International publication number:
**WO 2015/116937 (06.08.2015 Gazette 2015/31)**

(54) **GAS TURBINE ENGINE COMBUSTOR LINER PANEL WITH SYNERGISTIC COOLING FEATURES**

GASTURBINENBRENNKAMMERVERKLEIDUNGSPLATTE MIT SYNERGISTISCHEN
KÜHLMERKMALEN

PANNEAU D'HABILLAGE DE CHAMBRE DE COMBUSTION DE TURBINE À CARACTÉRISTIQUES
DE REFROIDISSEMENT SYNERGIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2014 US 201461933927 P**

(43) Date of publication of application:
**07.12.2016 Bulletin 2016/49**

(73) Proprietor: **United Technologies Corporation
Farmington, CT 06032 (US)**

(72) Inventors:
• **KOSTKA, Stanislav
Shrewsbury, Massachusetts 01545 (US)**
• **CUNHA, Frank J.
Avon, Connecticut 06001 (US)**

• **HOKE, James B,
Tolland, Connecticut 06084 (US)**
• **SNYDER, Timothy S.
Glastonbury, Connecticut 06033 (US)**
• **CHEUNG, Albert K.
East Hampton, Connecticut 06424 (US)**
• **ADAMOPOULOS, Christos
Colchester, Connecticut 06415-1954 (US)**

(74) Representative: **Dehns
St. Bride's House
10 Salisbury Square
London EC4Y 8JD (GB)**

(56) References cited:
**EP-A2- 1 318 353        WO-A1-2013/139938
US-A- 6 142 734        US-A1- 2007 245 742
US-A1- 2008 115 498        US-A1- 2013 000 312**

EP 3 099 975 B1

**Description**

**BACKGROUND**

The present disclosure relates to a gas turbine engine and, more particularly, to a combustor section therefor.

Gas turbine engines, such as those that power modern commercial and military aircraft, generally include a compressor section to pressurize an airflow, a combustor section to burn a hydrocarbon fuel in the presence of the pressurized air, and a turbine section to extract energy from the resultant combustion gases.

Among the engine components, relatively high temperatures are observed in the combustor section such that cooling airflow is provided to meet desired service life requirements. The combustor section typically includes a combustion chamber formed by an inner and outer wall assembly. Each wall assembly includes a support shell lined with heat shields often referred to as liner panels. In certain combustion architectures, dilution passages directly communicate airflow into the combustion chamber to condition air within the combustion chamber.

In addition to the dilution passages, the shells may have relatively small air impingement passages to direct cooling air to impingement cavities between the support shell and the liner panels. This cooling air exits numerous effusion passages through the liner panels to effusion cool the passages through the liner panels and film cool a hot side of the liner panels to reduce direct exposure to the combustion gases.

EP 1318353 A2 discloses features of the preamble of claim 1, and US 2008/1154498 A1 and WO 2013/139938 A1 disclose other prior art arrangements.

**SUMMARY**

A wall assembly for a gas turbine engine, according to aspect of the present invention, is claimed in claim 1.

Various embodiments of the present invention are disclosed in the dependent claims.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

**BRIEF DESCRIPTION OF THE DRAWINGS**

Various features will become apparent to those skilled in the art from the following detailed description of the disclosed non-limiting embodiment(s). The drawings that accompany the detailed description can be briefly described as follows:

FIG. 1 is a schematic cross-section of an example gas turbine engine architecture;
FIG. 2 is a schematic cross-section of another example gas turbine engine architecture;
FIG. 3 is an expanded longitudinal schematic sectional view of a combustor section according to one non-limiting embodiment that may be used with the example gas turbine engine architectures shown in FIGS. 1 and 2;
FIG. 4 is an expanded perspective view of a liner panel array from a cold side;
FIG. 5 is an exploded view of a wall assembly of the combustor;
FIG. 6 is a cold side view of a liner panel with a multiple of cone shaped pin heat transfer augmentors according to one disclosed non-limiting embodiment;
FIG. 7 is an expanded side view of the cone shaped pin heat transfer augmentors according to one disclosed non-limiting embodiment;
FIG. 8 is an expanded side view of a rounded tip of the cone shaped pin heat transfer augmentors according to an embodiment not in accordance with the invention;
FIG. 9 is an expanded side view of a rounded tip of the cone shaped pin heat transfer augmentors according to an embodiment in accordance with the invention;
FIG. 10 is a schematic view of an impingement jet striking a top of the cone shaped pin heat transfer augmentors;
FIG. 11 is a schematic view of an impingement jet striking a side of the cone shaped pin heat transfer augmentors;
FIG. 12 is a schematic view of an impingement jet striking the valley between the cone shaped pin heat transfer augmentors; and
FIG. 13 is an expanded top view of the cone shaped pin heat transfer augmentors according to one disclosed non-limiting embodiment.

**DETAILED DESCRIPTION**

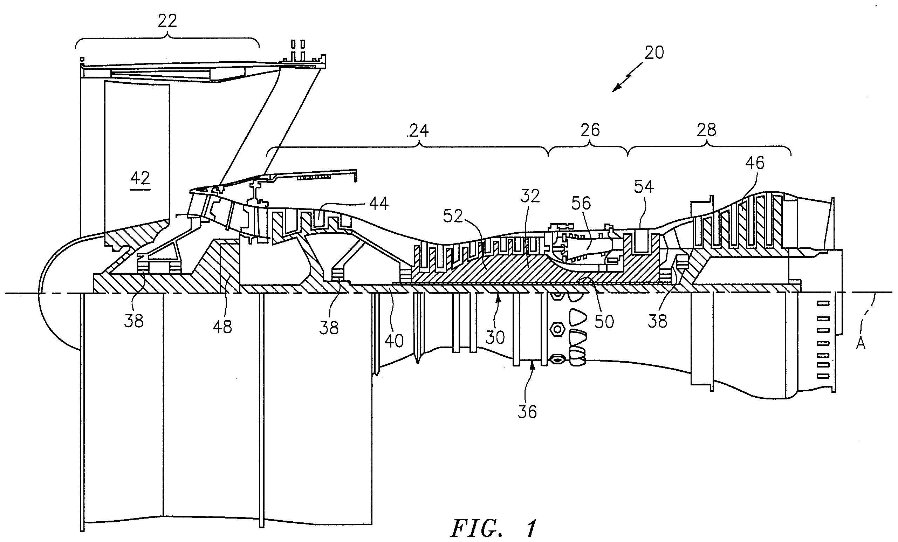

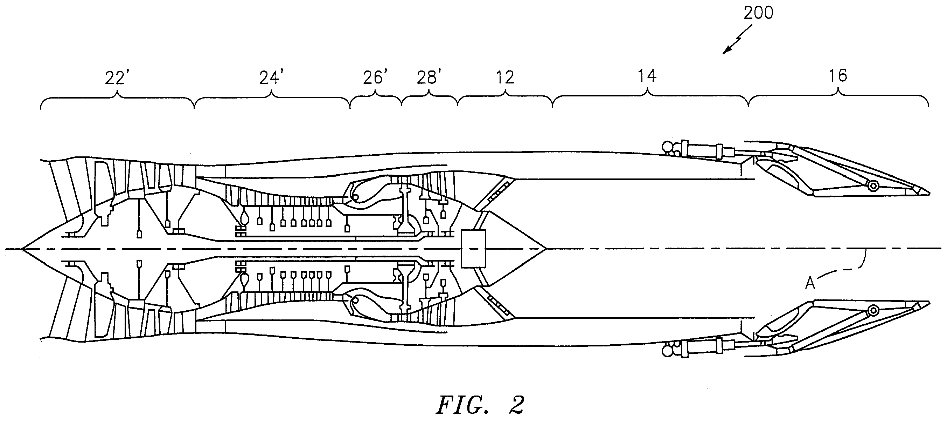

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engine architectures 200 might include an augmentor section 12, an exhaust duct section 14 and a nozzle section 16 in addition to the fan section 22', compressor section 24', combustor section 26' and turbine section 28' (see FIG. 2) among other systems or features. The fan section 22 drives air along a bypass flowpath and into the compressor section 24. The compressor section 24 drives air along a core flowpath for compression and communication into the combustor section 26 then expansion through the turbine section 28. Although depicted as a turbofan in the disclosed non-limiting embodiment, it should be understood that the concepts described herein are not limited to use with turbofans as the teachings may be applied to other types of turbine engines such as a turbojets, turboshafts, and three-spool (plus fan) turbofans with an intermediate spool.

The engine 20 generally includes a low spool 30 and a high spool 32 mounted for rotation about an engine central longitudinal axis A relative to an engine static structure 36 via several bearing structures 38. The low spool 30 generally includes an inner shaft 40 that interconnects a fan 42, a low pressure compressor ("LPC") 44 and a low pressure turbine ("LPT") 46. The inner shaft 40 may drive the fan 42 directly or through a geared architecture 48 to drive the fan 42 at a lower speed than the low spool 30. An exemplary reduction transmission is an epicyclic transmission, namely a planetary or star gear system.

The high spool 32 includes an outer shaft 50 that interconnects a high pressure compressor ("HPC") 52 and a high pressure turbine ("HPT") 54. A combustor 56 is arranged between the high pressure compressor 52 and the high pressure turbine 54. The inner shaft 40 and the outer shaft 50 are concentric and rotate about the engine central longitudinal axis A which is collinear with their longitudinal axes.

Core airflow is compressed by the LPC 44 then the HPC 52, mixed with the fuel and burned in the combustor 56, then expanded over the HPT 54 and the LPT 46. The turbines 46, 54 rotationally drive the respective low spool 30 and high spool 32 in response to the expansion. The main engine shafts 40, 50 are supported at a plurality of points by the bearing compartments 38 within the static structure 36. It should be understood that various bearing compartments 38 at various locations may alternatively or additionally be provided.

In one non-limiting example, the gas turbine engine 20 is a high-bypass geared aircraft engine. In a further example, the gas turbine engine 20 bypass ratio is greater than about six (6:1). The geared architecture 48 can include an epicyclic gear train, such as a planetary gear system or other gear system. The example epicyclic gear train has a gear reduction ratio of greater than about 2.3, and in another example is greater than about 2.5:1. The geared turbofan enables operation of the low spool 30 at higher speeds which can increase the operational efficiency of the LPC 44 and the LPT 46 and render increased pressure in a fewer number of stages.

A pressure ratio associated with the LPT 46 is pressure measured prior to the inlet of the LPT 46 as related to the pressure at the outlet of the LPT 46 prior to an exhaust nozzle of the gas turbine engine 20. In one non-limiting embodiment, the bypass ratio of the gas turbine engine 20 is greater than about ten (10:1), the fan diameter is significantly larger than that of the LPC 44, and the LPT 46 has a pressure ratio that is greater than about five (5:1). It should be understood, however, that the above parameters are only exemplary of one embodiment of a geared architecture engine and that the present disclosure is applicable to other gas turbine engines including direct drive turbofans.

In one embodiment, a significant amount of thrust is provided by the bypass flow path due to the high bypass ratio. The fan section 22 of the gas turbine engine 20 is designed for a particular flight condition - typically cruise at about 0.8 Mach and about 35,000 feet. This flight condition, with the gas turbine engine 20 at its best fuel consumption, is also known as bucket cruise Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane system. The low Fan Pressure Ratio according to one non-limiting embodiment of the example gas turbine engine 20 is less than 1.45. Low Corrected Fan Tip Speed is the actual fan tip speed divided by an industry standard temperature correction of ("Tram" / 518.7)$^{0.5}$. The Low Corrected Fan Tip Speed according to one non-limiting embodiment of the example gas turbine engine 20 is less than about 1150 fps (351 m/s).

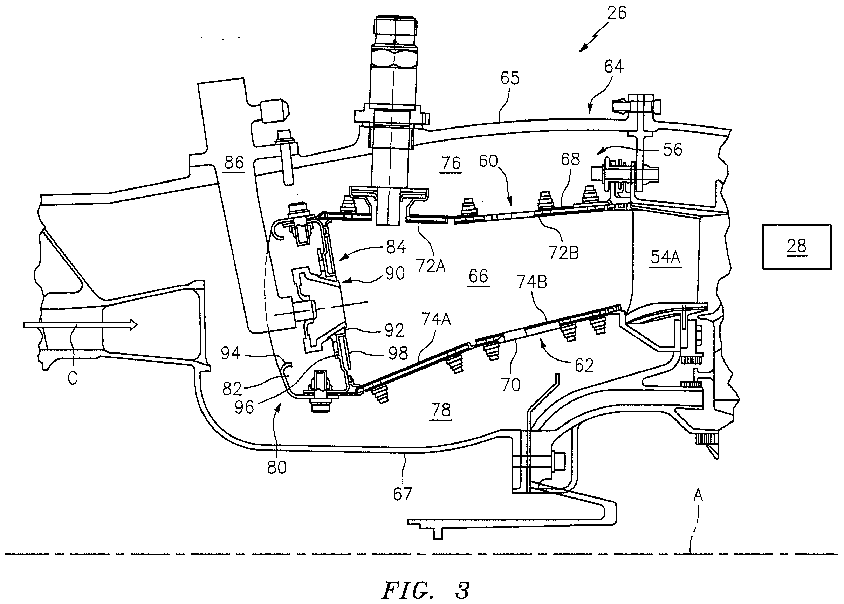

With reference to FIG. 3, the combustor section 26 generally includes a combustor 56 with an outer combustor wall assembly 60, an inner combustor wall assembly 62 and a diffuser case module 64. The outer combustor wall assembly 60 and the inner combustor wall assembly 62 are spaced apart such that a combustion chamber 66 is defined therebetween. The combustion chamber 66 is generally annular in shape.

The outer combustor wall assembly 60 is spaced radially inward from an outer diffuser case 65 of the diffuser case module 64 to define an outer annular plenum 76. The inner combustor wall assembly 62 is spaced radially outward from an inner diffuser case 67 of the diffuser case module 64 to define an inner annular plenum 78. It should be understood that although a particular combustor is illustrated, other combustor types with various combustor liner arrangements will also benefit herefrom. It should be further understood that the disclosed cooling flow paths are but an illustrated embodiment and should not be limited only thereto.

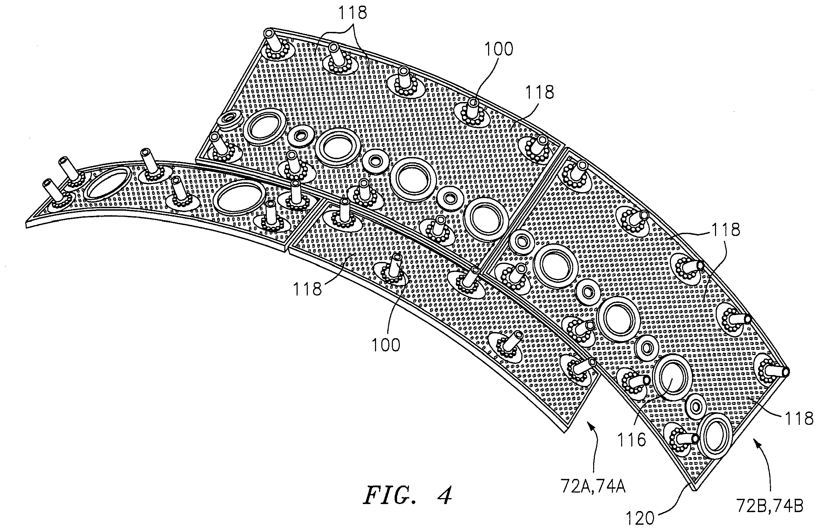

The combustor wall assemblies 60, 62 contain the combustion products for direction toward the turbine section 28. Each combustor wall assembly 60, 62 generally includes a respective support shell 68, 70 which support an array of liner panels 72, 74. Each of the liner panels 72, 74 may be generally rectilinear and manufactured of, for example, a nickel based super alloy, ceramic or other temperature resistant material and are arranged to form a liner array. In one disclosed non-limiting embodiment, the liner array includes a multiple of forward liner panels 72A and a multiple of aft liner panels 72B that are circumferentially staggered (also shown in FIG. 4). The multiple of forward liner panels 74A and the multiple of aft liner panels 74B may be circumferentially staggered to line the hot side of the inner shell 70.

The combustor 56 further includes a forward assembly 80 immediately downstream of the compressor section 24 to receive compressed airflow therefrom. The forward assembly 80 generally includes an annular hood 82, a bulkhead assembly 84, a multiple of fuel nozzles 86 (one shown) and a multiple of fuel nozzle guides 90 (one shown). Each of the fuel nozzle guides 90 is circumferentially aligned with one of the hood ports 94 to project through the bulkhead assembly 84. The bulkhead assembly 84 includes a bulkhead support shell 96 secured to the combustor wall assemblies 60, 62, and a multiple of circumferentially distributed bulkhead liner panels 98 secured to the bulkhead support shell 96 around the central opening 92.

The annular hood 82 extends radially between, and is secured to, the forwardmost ends of the combustor wall assemblies 60, 62. The annular hood 82 includes a multiple of circumferentially distributed hood ports 94 that accommodate the respective fuel nozzle 86 and introduce air into the forward end of the combustion chamber 66 through a central opening 92. Each fuel nozzle 86 may be secured to the diffuser case module 64 and project through one of the hood ports 94 and the respective fuel nozzle guide 90.

The forward assembly 80 introduces core combustion air into the forward section of the combustion chamber 66 while the remainder enters the outer annular plenum 76 and the inner annular plenum 78. The multiple of fuel nozzles 86 and adjacent structure generate a blended fuel-air mixture that supports stable combustion in the combustion chamber 66.

Opposite the forward assembly 80, the outer and inner support shells 68, 70 are mounted to a first row of Nozzle Guide Vanes (NGVs) 54A in the HPT 54. The NGVs 54A are static engine components which direct core airflow combustion gases onto the turbine blades of the first turbine rotor in the turbine section 28 to facilitate the conversion of pressure energy into kinetic energy. The core airflow combustion gases are also accelerated by the NGVs 54A because of their convergent shape and are typically given a "spin" or a "swirl" in the direction of turbine rotor rotation. The turbine rotor blades absorb this energy to drive the turbine rotor at high speed.

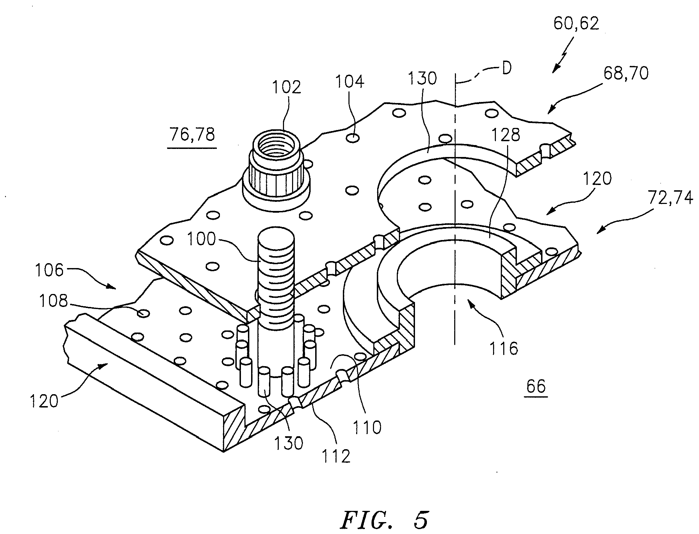

With reference to FIG. 5, a multiple of studs 100 extend from the liner panels 72, 74 so as to permit the liner panels 72, 74 to be mounted to their respective support shells 68, 70 with fasteners 102 such as nuts. That is, the studs 100 project rigidly from the liner panels 72, 74 and through the respective support shells 68, 70 to receive the fasteners 102 at a threaded distal end section thereof.

A multiple of cooling impingement passages 104 penetrate through the support shells 68, 70 to allow air from the respective annular plenums 76, 78 to enter cavities formed in the combustor wall assemblies 60, 62 between the respective support shells 68, 70 and liner panels 72, 74. The cooling impingement passages 104 are generally normal to the surface of the liner panels 72, 74. The air in the cavities 106 provides cold side impingement cooling of the liner panels 72, 74 that is generally defined herein as heat removal via internal convection.

A multiple of effusion passages 108 penetrate through each of the liner panels 72, 74. The geometry of the passages (e.g., diameter, shape, density, surface angle, incidence angle, etc.) as well as the location of the passages with respect to the high temperature main flow also contributes to effusion film cooling. The combination of impingement passages 104 and the effusion passages 108 may be referred to as an Impingement Film Floatwall (IFF) assembly.

The effusion passages 108 allow the air to pass from the cavities 106 defined in part by a cold side 110 of the liner panels 72, 74 to a hot side 112 of the liner panels 72, 74 and thereby facilitate the formation of thin, cool, insulating blanket or film of cooling air along I the hot side 112. The effusion passages 108 are generally more numerous than the impingement passages 104 to promote the development of film cooling along the hot side 112 to sheath the liner panels 72, 74. Film cooling as defined herein is the introduction of a relatively cooler air at one or more discrete locations along a surface exposed to a high temperature environment to protect that surface in the region of the air injection as well as downstream thereof.

A multiple of dilution passages 116 may penetrate through both the respective support shells 68, 70 and liner panels 72, 74 each along a common axis D. For example only, in a Rich-Quench-Lean (R-Q-L) type combustor, the dilution passages 116 are located downstream of the forward assembly 80 to quench the hot combustion gases within the combustion chamber 66 by direct supply of cooling air from the respective annular plenums 76, 78.

Some engine cycles and architectures demand that the gas turbine engine combustor 56 operate at relatively high compressor exit temperatures aft of the HPC 52 - referred to herein as T3. As further perspective, T1 is a temperature in front of the fan section 22; T2 is a temperature at the leading edge of the fan 42; T2.5 is the temperature between the LPC 44 and the HPC 52; T3 is the temperature aft of the HPC 52; T4 is the temperature in the combustion chamber 66;

T4.5 is the temperature between the HPT 54 and the LPT 46; and T5 is the temperature aft of the LPT 46 (see FIG. 1). These engine cycles and architectures also result in a further requirement that the high compressor exit temperatures exist in concert with a cooling air supply pressure decrease at higher altitudes. That is, available pressures may not be sufficient for cooling requirements at high altitudes as the heat transfer capability of the liner panels 72, 74 decrease by a factor of about two (2) as supply pressures decreases from, for example, sea level ram air flight conditions to higher altitude up and away flight conditions. The increased internal heat transfer coefficient for these engine cycles and architectures thereby indicates a required increased heat transfer multiplier to a sustainable metal temperature of the liner panels 72, 74.

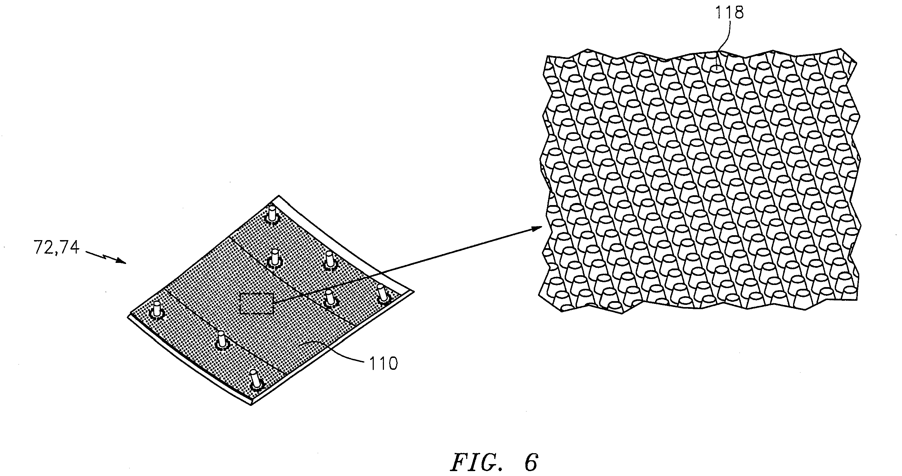

With reference to FIG. 6, a multiple of heat transfer augmentors 118 at least partially form the cold side 110 of each liner panel 72, 74 to increase heat transfer. The liner panels 72, 74 may be manufactured via a casting process or an additive manufacturing process that facilitates incorporation of the relatively small heat transfer augmentors 118 as well as other features. One additive manufacturing process is Laser Powder Bed Fusion (LPBF) operable to construct or "grow a three-dimensional article by selectively projecting a laser beam having the desired energy onto a layer of feedstock particles. When coupled with computer aided design apparatus, LPBF is an effective technique for producing prototype as well as mainstream production articles. Other such additive manufacturing processes utilize an electron beam within a vacuum as well as others.

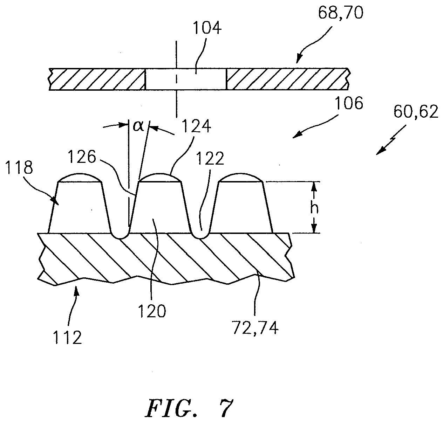

With reference to FIG. 7, in accordance with the invention, each of the multiple of heat transfer augmentors 118 defines a cone shaped pin (e.g., a truncated or non-truncated conically-shaped pin) 120 which optionally flanks a valley 122. It should be appreciated that the valley 122 as defined herein may be a generally non-flat (e.g., concave) surface.

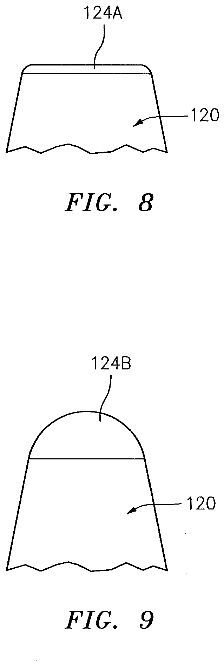

Each cone shaped pin 120 terminates with a rounded tip 124. The rounded tips 124 forms a distal end of each cone shaped pin 120 and provides a relatively significant surface area. The rounded tip 124 is a hemi-spherical surface 124B (see FIG. 9). Variances typical of the casting process may beneficially result in variances to the rounded tips 124 as the rounded tips 124 as defined herein need not require relatively sharp edges and need not be consistent other than being relatively "rounded" as defined herein. When manufactured via a casting process, the cone shaped pins 120 typically slightly under fill when casted which may thereby result in the desired rounded curvature to the tip that thereby has the beneficial result of increased heat transfer efficiencies.

In this disclosed non-limiting embodiment, the cone shaped pins 120 extend from the cold side 110 for an about half-height of the cavity 106 that may be convergent. That is, the heat transfer augmentors 118 extend about half way to the respective the support shell 68, 70 and follow the profile thereof should a non-linear spacing be provided therebetween. In this disclosed non-limiting embodiment, a gap between a center to center distance of the rounded tip 124 of the heat transfer augmentors 118 is, for example at a minimum, about equivalent to a diameter of the impingement passage 104 to facilitate air flow between the heat transfer augmentors 118. It should be appreciated that other heights will alternatively or additionally benefit herefrom.

Cooling effectiveness of the liner panel 72, 74 is dependent on a number of factors, one of which is the heat transfer coefficient. This heat transfer coefficient depicts how well heat is transferred from the liner panel 72, 74, to the cooling air. As the liner panel 72, 74 surface area increases on account of the dominant contribution of the cone shaped pins 120, this coefficient increases due to a greater ability to transfer heat to the cooling air. Turbulation of the air also increases this heat transfer. In this disclosed non-limiting embodiment, the liner panel 72, 74 with heat transfer augmentors 118 may be described by the formula:

$$\mathrm{Nu}_{\mathrm{Channel}} = C_0 \left[ \left( \frac{A_{\mathrm{plate}}}{A_{\mathrm{total}}} \right) \; \mathrm{Nu}_{\mathrm{plate}} + \boldsymbol{\eta}_{\mathrm{p}} \left( \frac{A_{\mathrm{pin}}}{A_{\mathrm{total}}} \right) \mathrm{Nu}_{\mathrm{pin}} \right] \qquad [1]$$

Where:

Nu is the Nusselt number. In heat transfer at a boundary (surface) within a fluid, the Nusselt number (Nu) is the ratio of convective to conductive heat transfer across (normal to) the boundary. In this context, convection includes both advection and diffusion;
Co is an empirical constant that may reflect heat transfer capability between developing and developed cooling flow;
A is an area of the respective surface; and
$\eta$p is an efficiency constant of the pin;

Generally, in function, the above-defined formula results in the desire to minimize the flat plate of the cold side 110 to maximize heat transfer. That is, the valley 122 defined between the cone shaped pins 120 is a non-flat surface such that spacing between the cone shaped pins 120 is minimized. This facilitates the dominant contribution of the cone shaped pins 120 to cooling of the liner panel 72, 74, as opposed to the flat plate contribution.

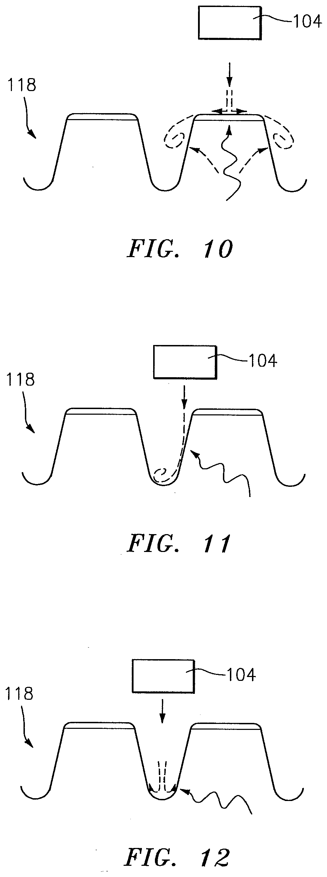

According to the invention, each cone shaped pin 120 has a side surface 126 extending at an angle α of between about ten (10) and twenty-five (25) degrees from the vertical (e.g., relative to a line orthogonal to the panel) and optionally extends from the cold side 110 for a distance "h" of about 0.04 inches (1 mm). The shape of the cone shaped pin 120 with a rounded tip 124 facilitates synergistic impingement of the cooling jets from the impingement passages 104 irrespective of whether the cooling jet strikes the rounded tip 124 (see FIG. 10), the side surface 126 (see FIG. 11), or the valley 122 (see FIG. 12).

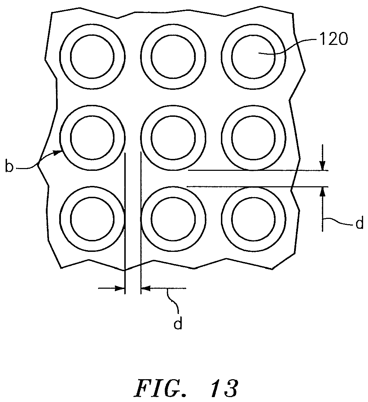

In this example, each cone shaped pin 120 is also spaced from the adjacent cone shaped pin 120 by a distance "d" about 0.01 -0.02 inches (0.25 - 0.5 mm) with a base diameter "b" of about 0.05 inches (1.3mm) (FIG. 13). The cone shaped pin 120 is arranged in a square pattern. The equilateral triangle pattern is per a typical pattern of the impingement passages 104. The square pattern facilitates randomness between the heat transfer augmentors 118 and cooling jets (FIGS. 10-12) to minimize any misalignment effects from laser drilling of the impingement passages 104.

The multiple of heat transfer augmentors 118 increase surface area, promote turbulence, increase thermal efficiency, and facilitate film cooling as the spent impingement flow is directed towards the effusion passages 108 (see FIG. 5). The heat transfer relies primarily on the surface heat transfer augmentors 118 and the attributes thereof. In general, flow transition from the stagnation impingement flow to turbulence follows the mechanism associated with turbulence creation through unstable Tollmien-Schiliting waves, three-dimensional instability, then by vortex breakdown in a cascading process which leads to intense flow fluctuations and energy exchange or high heat transfer. This natural process is facilitated by the multiple of heat transfer augmentors 118 to provide high energy exchange, turbulence, coalescence of turbulence spot assemblies and redirection of flow towards more sensitive heat transfer areas, along with flow reattachment.

The cooling features when combined with impingement heat transfer increases the cooling effectiveness of the coolant air while decreasing panel temperatures. The resultant temperature decrease can increase panel service life.

The use of the terms "a" and "an" and "the" and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. It should be appreciated that relative positional terms such as "forward," "aft," "upper," "lower," "above," "below," and the like are with reference to the normal operational attitude of the vehicle and should not be considered otherwise limiting.

**Claims**

1. A wall assembly (60) for a gas turbine engine (20), comprising:

   a support shell (68, 70);
   a liner panel (72, 74) for a combustor (56) of the gas turbine engine, the liner panel (72, 74) mounted to and spaced from the support shell (68, 70) so as to define cavities (106) formed in the combustor wall assembly (60) between the support shell (68, 70) and liner panel (72, 74), wherein a multiple of cooling impingement passages (104) penetrate through the support shell (68, 70) to allow air from a radially outer plenum (76) to enter the cavities (106), wherein the liner panel (72, 74) comprises:
   a multiple of heat transfer augmentors (118) at least partially forming a cold side (110) of the liner panel (72, 74), each defining a cone shaped pin (120), **characterized in that** each cone shaped pin (120) terminates with a rounded tip (124) that forms a distal end of each cone shaped pin (120), wherein each rounded tip (124) defines a hemi-spherical surface (124B) and each cone shaped pin (120) has a side surface (126) extending at an angle (α) of between 10 and 25 degrees from a line orthogonal to the liner panel (72, 74).

2. The wall assembly as recited in claim 1, wherein the cone shaped pin (120) extends for a distance of about 1 mm (0.04 inch).

3. The wall assembly as recited in claim 1 or 2, wherein each of the multiple of cone shaped pins (120) is spaced from adjacent cone shaped pins (120) by about 0.25 - 0.5 mm (0.01 - 0.02 inch).

4. The wall assembly as recited in claim 1, 2 or 3, wherein the liner panel (72, 74) includes a surface defining a valley (122) between the cone shaped pins (120), and the surface includes a curved portion.

5. The wall assembly as recited in claim 4, wherein an entirety of the valley (122) is curved.

6. The wall assembly as recited in claim 4 or 5, wherein the valley (122) is non-flat.

7. The wall assembly as recited in any preceding claim, wherein the rounded tips (124) of each cone shaped pin (120) are directed toward the support shell (68, 70).

8. The wall assembly as recited in any preceding claim, wherein the rounded tips (124) of each cone shaped pin are spaced from the support shell (68, 70).

9. The wall assembly as recited in any preceding claim, wherein the multiple of heat transfer augmentors (118) extend from the liner panel (72, 74) toward the support shell (68, 70).

10. The wall assembly as recited in claim 9, wherein the multiple of heat transfer augmentors (118) extend from the liner panel (72, 74) about half a distance to the support shell (68, 70).


**Patentansprüche**

1. Wandbaugruppe (60) für einen Gasturbinenmotor (20), umfassend:

   eine Stützschale (68, 70);
   eine Verkleidungsplatte (72, 74) für eine Brennkammer (56) des Gasturbinenmotors, wobei die Verkleidungsplatte (72, 74) an der Stützschale (68, 70) montiert und von dieser beabstandet ist, um Hohlräume (106) zu definieren, die in der Brennkammerwandbaugruppe (60) zwischen der Stützschale (68, 70) und der Verkleidungsplatte (72, 74) gebildet sind, wobei eine Vielzahl von Kühlpralldurchlässen (104) die Stützschale (68, 70) penetriert, um zu ermöglichen, dass Luft aus einer radial äußeren Kammer (76) in die Hohlräume (106) eintritt, wobei die Verkleidungsplatte (72, 74) Folgendes umfasst:

   eine Vielzahl von Wärmeübertragungsnachbrennern (118), die zumindest teilweise eine kalte Seite (110) der Verkleidungsplatte (72, 74) bildet, die jeweils einen kegelförmigen Stift (120) definieren, **dadurch gekennzeichnet,**
   **dass** jeder kegelförmige Stift (120) mit einer abgerundeten Spitze (124) endet, die ein distales Ende jedes kegelförmigen Stiftes (120) bildet, wobei jede abgerundete Spitze (124) eine halbkugelförmige Fläche (124B) definiert und jeder kegelförmige Stift (120) eine Seitenfläche (126) aufweist, die sich in einem Winkel ($\alpha$) zwischen 10 und 25 Grad von einer Linie orthogonal zu der Verkleidungsplatte (72, 74) erstreckt.

2. Wandbaugruppe nach Anspruch 1, wobei sich der kegelförmige Stift (120) über eine Strecke von ungefähr 1 mm (0,04 Zoll) erstreckt.

3. Wandbaugruppe nach Anspruch 1 oder 2, wobei jeder aus der Vielzahl von kegelförmigen Stiften (120) von benachbarten kegelförmigen Stiften (120) um ungefähr 0,25-0,5 mm (0,01-0,02 Zoll) beabstandet ist.

4. Wandbaugruppe nach Anspruch 1, 2 oder 3, wobei die Verkleidungsplatte (72, 74) eine Fläche beinhaltet, die eine Vertiefung (122) zwischen den kegelförmigen Stiften (120) definiert und die Fläche einen gebogenen Abschnitt beinhaltet.

5. Wandbaugruppe nach Anspruch 4, wobei eine Gesamtheit der Vertiefung (122) gebogen ist.

6. Wandbaugruppe nach Anspruch 4 oder 5, wobei die Vertiefung (122) nicht flach ist.

7. Wandbaugruppe nach einem vorhergehenden Anspruch, wobei die abgerundeten Spitzen (124) jedes kegelförmigen Stiftes (120) in Richtung der Stützschale (68, 70) gerichtet sind.

8. Wandbaugruppe nach einem vorhergehenden Anspruch, wobei die abgerundeten Spitzen (124) jedes kegelförmigen Stiftes von der Stützschale (68, 70) beabstandet sind.

9. Wandbaugruppe nach einem vorhergehenden Anspruch, wobei sich die Vielzahl von Wärmeübertragungsnachbrennern (118) von der Verkleidungsplatte (72, 74) in Richtung der Stützschale (68, 70) erstreckt.

**10.** Wandbaugruppe nach Anspruch 9, wobei sich die Vielzahl von Wärmeübertragungsnachbrennern (118) von der Verkleidungsplatte (72, 74) etwa die halbe Strecke zu der Stützschale (68, 70) erstreckt.

**Revendications**

**1.** Ensemble paroi (60) pour un moteur à turbine à gaz (20), comprenant :

une enveloppe de support (68, 70) ;
un panneau d'habillage (72, 74) pour une chambre de combustion (56) du moteur à turbine à gaz, le panneau d'habillage (72, 74) étant monté sur l'enveloppe de support (68, 70) et espacé de celle-ci afin de définir des cavités (106) formées dans l'ensemble paroi (60) de chambre de combustion entre l'enveloppe de support (68, 70) et le panneau d'habillage (72, 74), dans lequel une multiplicité de passages d'impact de refroidissement (104) pénètrent à travers l'enveloppe de support (68, 70) pour permettre à de l'air d'un plénum radialement externe (76) d'entrer dans les cavités (106), dans lequel le panneau d'habillage (72, 74) comprend :

une multiplicité d'augmentateurs de transfert de chaleur (118) formant au moins partiellement un côté froid (110) du panneau d'habillage (72, 74), chacun définissant une broche en forme de cône (120), **caractérisé en ce que** chaque broche en forme de cône (120) se termine avec une pointe arrondie (124) qui forme une extrémité distale de chaque broche en forme de cône (120),
dans lequel chaque pointe arrondie (124) définit une surface hémisphérique (124B) et chaque broche en forme de cône (120) possède une surface latérale (126) s'étendant à un angle ($\alpha$) d'entre 10 et 25 degrés par rapport à une ligne orthogonale au panneau d'habillage (72, 74).

**2.** Ensemble paroi selon la revendication 1, dans lequel la broche en forme de cône (120) s'étend sur une distance d'environ 1 mm (0,04 pouce).

**3.** Ensemble paroi selon la revendication 1 ou 2, dans lequel chacune de la multiplicité de broches en forme de cône (120) est espacée de broches en forme de cône adjacentes (120) d'environ 0,25 à 0,5 mm (0,01 à 0,02 pouce).

**4.** Ensemble paroi selon la revendication 1, 2 ou 3, dans lequel le panneau d'habillage (72, 74) inclut une surface définissant une vallée (122) entre les broches en forme de cône (120) et la surface inclut une partie incurvée.

**5.** Ensemble paroi selon la revendication 4, dans lequel une entièreté de la vallée (122) est incurvée.

**6.** Ensemble paroi selon la revendication 4 ou 5, dans lequel la vallée (122) est non-plate.

**7.** Ensemble paroi selon une quelconque revendication précédente, dans lequel les pointes arrondies (124) de chaque broche en forme de cône (120) sont orientées en direction de l'enveloppe de support (68, 70).

**8.** Ensemble paroi selon une quelconque revendication précédente, dans lequel les pointes arrondies (124) de chaque broche en forme de cône sont espacées de l'enveloppe de support (68, 70).

**9.** Ensemble paroi selon une quelconque revendication précédente, dans lequel la multiplicité d'augmentateurs de transfert de chaleur (118) s'étendent à partir du panneau d'habillage (72, 74) en direction de l'enveloppe de support (68, 70).

**10.** Ensemble paroi selon la revendication 9, dans lequel la multiplicité d'augmentateurs de transfert de chaleur (118) s'étendent à partir du panneau d'habillage (72, 74) sur environ la moitié d'une distance à l'enveloppe de support (68, 70) .

*FIG. 1*

*FIG. 2*

FIG. 3

EP 3 099 975 B1

*FIG. 4*

*FIG. 5*

FIG. 6

*FIG. 7*

124A

120

**FIG. 8**

124B

120

**FIG. 9**

EP 3 099 975 B1

FIG. 10

FIG. 11

FIG. 12

*FIG. 13*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1318353 A2
- US 20081154498 A1
- WO 2013139938 A1